# EUROPÄISCHE PATENTSCHRIFT

(11) **EP 2 496 426 B1**
(45) Veröffentlichungstag und Bekanntmachung des Hinweises auf die Patenterteilung: **10.12.2014**
(21) Anmeldenummer: 10761013.1
(22) Anmeldetag: 06.10.2010
(51) Int. Cl.: B60G 17/052, F16K 7/02, F16K 15/00, F16K 17/00

(54) **LUFTFEDER MIT SCHALTVENTIL ZUR RESTDRUCKHALTUNG**
AIR SPRING HAVING A CONTROL VALVE FOR RESIDUAL PRESSURE MAINTENANCE
RESSORT PNEUMATIQUE COMPRENANT UNE SOUPAPE DE COMMANDE POUR MAINTENIR UNE PRESSION RÉSIDUELLE

(30) Priorität: 06.11.2009 DE 102009044456
(43) Veröffentlichungstag der Anmeldung: 12.09.2012
(73) Patentinhaber: Continental Teves AG & Co. oHG, 60488 Frankfurt (DE)
(72) Erfinder: FOLCHERT, Uwe, 31867 Lauenau (DE)
(74) Vertreter: Höer, Daniela
(86) Internationale Anmeldenummer: PCT/EP2010/064872
(87) Internationale Veröffentlichungsnummer: WO 2011/054615

(56) Entgegenhaltungen:
- DE-A1- 19 527 937
- JP-A- 2002 250 258

## Beschreibung

Die Erfindung betrifft eine rohrförmige Luftleitung mit einem Restdruckhalteventil in einem Luftversorgungssystem, wobei das Restdruckhalteventil zwischen mindestens einem Druckerzeuger und mindestens einem Druckverbraucher oder -aktuator angeordnet ist. Das Restdruckhalteventil weist dabei einen Ventilsitz, einen zum Ventilsitz komplementären und durch einen Öffnungsdruck bewegbaren Ventilkörper, ein Ventilsitz und Ventilkörper umschließendes und gegen Umgebungsdruck abgedichtetes Ventilgehäuse und ein zwischen Ventilsitz und Ventilkörper gegen den Öffnungsdruck des Ventils wirkendes elastisches Element.

Restdruckhalteventile werden z.B. in Luftfedersystemen für Fahrzeuge eingesetzt. Die Luftfedersysteme bestehen dabei aus den Luftfedern, die zwischen Fahrwerk und Karosserie eingespannt sind, und dem zugehörigen Luftversorgungssystem mit entsprechender, meistens elektronischer Steuerung. Die Luftfedern weisen einen Luftfederbalg auf, der zwischen einem üblicherweise karosserieseitigen Luftfederdeckel und einem fahrwerkseitigen Abrollkolben befestigt ist und der im Betrieb unter einem inneren Überdruck steht. Der Luftfederbalg bildet die eigentliche "Arbeitskammer" der Feder und rollt unter Last und bei Federbewegungen unter Bildung einer Rollfalte auf der Außenkontur eines konzentrischen Bauteiles ab, üblicherweise auf dem Luftfederkolben/Abrollkolben. Eine derartige Luftfeder wird häufig in Straßen- oder Schienenfahrzeugen eingesetzt, um eine komfortable Federung zu erreichen.

Bei den so genannte "Restdruckhalteventilen" handelt es sich um Absperrventile, die etwa beim Transport der Luftfeder vor dem Einbau ins Fahrzeug, bei Abschalten der Luftversorgung für Wartungstätigkeiten, beim Abziehen der oder bei Schäden in den Luftzufuhrleitungen dafür sorgen, dass ein Mindestdruck im Luftfederbalg / in der Arbeitskammer erhalten bleibt und nicht alle Luft daraus entweichen kann. Dies geschieht, damit die einzelnen Teile der ohne Luft-Innendruck in sich zusammensinkenden Luftfeder nicht beschädigt werden können. Üblicherweise liegt ein solcher Mindestdruck bei ca. 3 bar.

Die DE 195 27 937 A1 zeigt ein solches zusätzliches Restdruckhalteventil, welches durch eine besonders einfache Konstruktion verhindert, dass ein bestimmter Mindestdruck in der Luftfeder unterschritten wird.

Die Verwendung von unterschiedlichen Ventilen für jede einzelne Funktion der Luftfeder ist jedoch relativ aufwendig und kostenintensiv und erhöht auch das Gewicht der Luftfeder.

Andere bekannte Restdruckhalteventile (RDHV) sind teilweise aufwendig konstruiert und teuer in der Herstellung oder weisen einen zu geringen anwendbaren Luftfederdruck auf, bei dem die Luftfeder noch abgelassen werden kann. Die freien Querschnitte sind oft gering und führen zu einem hohen pneumatischen Widerstand. Die Stabilität über die Lebensdauer und die Dichtigkeit nach außen sind oft aufgrund der eingesetzten Elastomerbauteile unzureichend. Auch können Entlüftungsbohrungen zur Umgebung, die für die Funktion notwendig sind, bei Verschmutzung oder Verstopfung zu Problemen führen.

Für die Erfindung bestand daher die Aufgabe, ein Restdruckhalteventil bereitzustellen, bei dem die Anzahl der Bauteile reduziert werden kann ohne auf gewünschte Sicherheits- und Komfortfunktionen zu verzichten, wobei die Luftfeder zudem konstruktiv möglichst einfach aufgebaut und kostengünstig herstellbar sein soll.

Gelöst wird die Aufgabe durch die Merkmale des Hauptanspruchs. Weitere vorteilhafte Ausbildungen sind in den Unteransprüchen offenbart.

Dabei sind sowohl der Ventilsitz und als auch der Ventilkörper als zusammenwirkende Endteile einer Trennstelle der rohrförmigen Luftleitung ausgebildet. Der Ventilsitz ist an dem Endteil angeordnet, welches der Druckerzeugerseite der Luftleitung zugeordnet ist, während der Ventilkörper an dem Endteil angeordnet ist, welches der Druckverbraucherseite der Luftleitung zugeordnet ist. Der Ventilkörper ist dabei koaxial zur rohrförmigen Luftleitung bewegbar. Das als Ventilkörper ausgebildete Endteil weist eine Entlüftung in das Ventilgehäuse sowie ein oder mehrere im Ventilgehäuse angeordnete und durch den Gehäuse-Innendruck beaufschlagte Wirkflächen auf, etwa am Ventilkörper oder am zugeordneten Endteil angeordnete Kolbenflächen, Stirnflächen oder Ringflächen, und zwar derart, dass neben dem durch den Druckerzeuger erzeugten Druck auch der im Druckverbraucher anliegende Druck als Öffnungsdruck wirkt. Das elastische Element verbindet dabei die Endteile der rohrförmigen Luftleitung und presst sie so gegeneinander, dass auf der Seite des Druckverbrauchers ein Restdruck aufrecht erhalten wird.

Der besondere Vorteil der erfindungsgemäßen Ausbildung besteht darin, dass das Restdruckhalteventil besonders einfach und klein ausgebildet ist und auf einfachste Weise und nahezu an jedem geeigneten Ort eines Luftfedersystems in bestehende Leitungen eingebaut werden kann.

Das Restdruckhalteventil öffnet bei normalem Betriebsdruck vom Durckerzeuger / Kompressor und schließt, wenn kein oder kein ausreichender Kompressordruck mehr vorhanden ist und der Druck in dem/den Druckverbrauchern unter einen durch das elastische Element einstellbaren Mindestdruck gesunken ist. Soll bei geringen Druck im Druckverbraucher letzterer wieder befüllt werden, so kann der Dichtsitz von der Kompressorseite her mit geringen Überdruck aufgedrückt und die Befüllung durchgeführt werden.

Das Restdruckhalteventil ist also neben dem durch den Druckerzeuger erzeugten Druck auch durch den im Druckverbraucher anliegenden Druck zu öffnen, solange der im Druckverbraucher anliegende Druck den Mindestdruck nicht unterschreitet. Da beide "Drücke" in Öffnungsrichtung wirken und der Kompressordruck immer größer oder gleich Verbraucherdruck ist, schließt das Restdruckhalteventil also immer dann, wenn kein Kompressordruck mehr vorhanden ist und im System ein Druck erreicht wird, der kleiner oder gleich dem Mindestdruck ist.

Eine vorteilhafte Ausbildung besteht darin, dass das als Ventilsitz ausgebildete eine Endteil aus einem offenen Rohrabschnitt besteht und das als Ventilkörper ausgebildete andere Endteil einen Stopfen aufweist, der mit dem Rohrabschnitt dichtend zusammenwirkt. Durch eine solche Ausbildung als Rohabschnitt erreicht man eine sehr einfache Herstellung des Ventils bzw. der Ventilteile.

Eine weitere vorteilhafte Ausbildung besteht darin, dass das als Ventilsitz ausgebildete eine Endteil aus einem Rohrabschnitts mit einer zum lichten inneren Durchmesser der rohrförmigen Leitung geneigten Fase besteht und das als Ventilkörper ausgebildete andere Endteil einen im lichten inneren Durchmesser der rohrförmigen Leitung eingesetzten Stopfen aufweist, der mit der geneigten Fase dichtend zusammenwirkt. Dies verbessert durch die sichere Anlage die Dichtwirkung bei der genannten einfachen Herstellung.

Eine weitere vorteilhafte Ausbildung besteht darin, dass eines der Endteile mit einer konzentrischen und das andere Endteil umschließenden Hülse versehen ist, wobei die Hülse als Ventilgehäuse ausgebildet ist. Eine solche Ausbildung schützt die Ventilteile und dient gleichzeitig als einfache Führung für die relative koaxiale Verschiebung zwischen Ventilsitz und Ventilkörper. Eine Hülse als Gehäuse schützt gegenüber Verschmutzungen und insbesondere gegenüber Vereisung der Ventilteile. Wie in dem unten noch aufgeführten Ausführungsbeispiel, kann das als Ventilsitz ausgebildete eine Endteil mit einer konzentrischen und das als Ventilkörper ausgebildete andere Endteil umschließenden Hülse versehen werden, wobei die Hülse als Ventilgehäuse ausgebildet ist. Ebenso kann das als Ventilkörper ausgebildete Endteil mit einer konzentrischen und das als Ventilsitz ausgebildete andere Endteil umschließenden Hülse versehen werden.

Eine weitere vorteilhafte Ausbildung besteht darin, dass die Hülse, welche als Teil eines Endteiles ausgebildet ist, gegenüber dem anderen Endteil, welches von der Hülse umgeben ist, abgedichtet und letzterem gegenüber axial längsverschieblich ausgebildet ist, insbesondere im Zusammenhang mit einer Ausbildung, bei der das elastische Element innerhalb der Hülse angeordnet ist. Damit können einfache Schraubenfedern oder Gummifedern als elastische Elemente problemlos innerhalb der Hülse als Druck- oder als Zugelemente angeordnet werden.

Eine weitere vorteilhafte Ausbildung besteht darin, dass das elastische Element als elastischer Schlauch oder Balg ausgebildet ist, der die beiden Endteile als Ventilgehäuse umgibt. Dies ist sicher eine der einfachsten Möglichkeiten, das erfindungsgemäße Restdruckhalteventil herzustellen, da der Schlauch oder Balg lediglich über eine Länge der Endteile gezogen werden muss und dann die Endteile elastisch aneinander zieht. Dabei kann ein Gummischlauch oder Balg gleichzeitig auch als Ventilgehäuse dienen.

Eine weitere vorteilhafte Ausbildung besteht darin, dass die koaxiale Bewegbarkeit zwischen Ventilkörper und Ventilsitz durch Anschläge begrenzt ist. Dies ist vorteilhaft, um die Ventilbewegungen zu begrenzen, gerade wenn das Restdruckhalteventil beispielsweise innerhalb eines "freien" Leitungsteiles ausgebildet ist, also etwa in eine Luftdruckleitung zwischen Kompressor und Verbraucher.

Besonders geeignet aufgrund seiner geringen Baugröße, seiner einfachen, aber sicheren Funktion und aufgrund seiner Toleranz gegenüber Verschmutzungen und gegenüber Temperaturschwankungen, insbesondere seiner Toleranz gegenüber Vereisung, ist das erfindungsgemäße Restdruckhalteventil besonders geeignet zum Einsatz innerhalb einer Luftfedereinrichtung für ein Kraftfahrzeug.

Anhand eines Ausführungsbeispieles soll die Erfindung näher erläutert werden. Es zeigen
- Fig. 1: ein erfindungsgemäßes Restdruckhalteventil
- Fig. 2: eine weitere Ausführung des erfindungsgemäßen Restdruckhalteventils

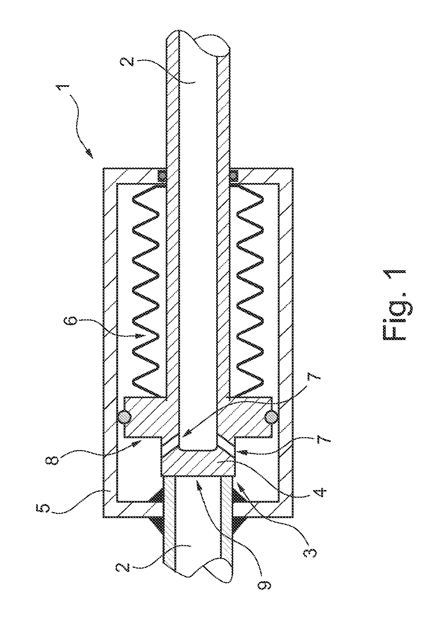

Die Fig. 1 zeigt eine rohrförmige Luftleitung 2 mit einem Restdruckhalteventil 1 eines Luftversorgungssystems einer Luftfederungsanlage eines Kraftfahrzeuges, wobei das Restdruckhalteventil zwischen dem Kompressor als Druckerzeuger und den Luftfedern als einem Druckverbraucher angeordnet ist. Kompressor und Luftfedern sind hier nicht näher dargestellt. In diesem Fall, d.h. bei dem Restdruckhalteventil gemäß Fig.1 befindet sich der Kompressor linksseitig des Restdruckhalteventils und die Luftfedern rechtsseitig des Restdruckhalteventils.

Das Restdruckhalteventil weist einen Ventilsitz 3 auf, einen zum Ventilsitz komplementären und durch einen Öffnungsdruck bewegbaren Ventilkörper 4,sowie ein Ventilsitz und Ventilkörper umschließendes und gegen Umgebungsdruck abgedichtetes Ventilgehäuse 5. Zwischen Ventilsitz 3 und Ventilkörper 4 ist eine gegen den Öffnungsdruck des Ventils wirkendes elastisches Element angeordnet, hier in Form einer als Druckfeder ausgebildeten Schraubenfeder 6 aus Federstahl. Im Bauraum der Feder herrscht Umgebungsdruck, wie unten beschrieben.

Sowohl der Ventilsitz 3 und als auch der Ventilkörper 4 sind als zusammenwirkende Endteile einer Trennstelle der rohrförmigen Luftleitung ausgebildet, wobei mit der oben beschriebenen Anordnung von Kompressor und Luftfedern der Ventilsitz 3 an dem Endteil angeordnet ist, welches der Druckerzeugerseite der Luftleitung zugeordnet ist und also zum Kompressor führt und der Ventilkörper 4 an dem Endteil angeord net ist, welches der Druckverbraucherseite der Luftleitung zugeordnet ist und somit zu den Luftfedern führt.

Der Ventilkörper 4 ist koaxial zur rohrförmigen Luftleitung und relativ zum Ventilsitz 3 bewegbar.

Das als Ventilkörper 4 ausgebildete Endteil weist Entlüftungsbohrungen 7 in das Ventilgehäuse 5 auf sowie eine im Ventilgehäuse 5 angeordnete und durch den Gehäuse-Innendruck beaufschlagte Kolbenringfläche 8 als Wirkfläche auf.

Zusammen mit der Stirnfläche 9 des Ventilkörpers 4 wirkt die Kolbenringfläche 8 derart, dass neben dem durch den Kompressor erzeugten und auf die Stirnfläche 9 wirkenden Leitungsdruck auch der in den Luftfedern anliegende und auf die Kolbenringfläche 8 wirkende Druck als Öffnungsdruck für das Ventil wirkt. Der die Schraubenfeder 6 aus Federstahl beinhaltende Teil des Gehäuses weist eine Verbindung zur Umgebung auf und steht somit unter Umgebungsdruck, d.h. Atmosphärendruck. Die Kolbenringfläche 8, d.h. der zugehörige "Kolben" ist dazu gegen die als Ventilgehäuse 5 ausgebildete Hülse abgedichtet.

Die Schraubenfeder 6 verbindet die Endteile, d.h. Ventilsitz 3 und Ventilkörper 4 der rohrförmigen Luftleitung 2 und presst Ventilsitz und Ventilkörper so gegeneinander, dass auf der Seite der Luftfedern ein Restdruck von ca. 2 bar aufrecht erhalten wird.

Das als Ventilsitz 3 ausgebildete eine Endteil besteht hier aus einem offenen und plan bearbeiteten Rohrabschnitt und das als Ventilkörper 4 ausgebildete andere Endteil als ein ebenso plan bearbeiteter Stopfen, der mit dem Rohrabschnitt dichtend zusammenwirkt.

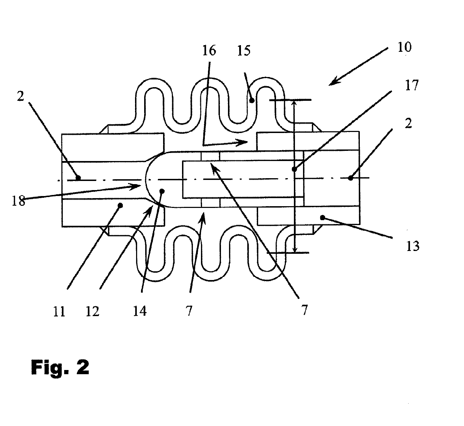

Fig. 2 zeigt eine weitere Ausführung 10 des erfindungsgemäßen Restdruckhalteventils, bei dem das als Ventilsitz 11 ausgebildete eine Endteil aus einem Rohrabschnitts mit einer zum lichten inneren Durchmesser der rohrförmigen Leitung geneigten Fase 12 besteht und das andere Endteil 13 einen als Ventilkörper ausgebildete und im lichten inneren Durchmesser der rohrförmigen Leitung eingesetzten und vorn halbkugelförmig ausgebildeten Stopfen 14 aufweist, der mit der geneigten Fase 12 dichtend zusammenwirkt.

Bei diesem Restdruckhalteventil ist das elastische Element als elastischer Balg 15 ausgebildet, der mit beiden Endteilen verbunden ist und letztere als Ventilgehäuse umgibt. Auch hier ist der Ventilkörper bzw. Stopfen 14 koaxial zur rohrförmigen Luftleitung 2 und relativ zum Ventilsitz 11 bewegbar.

Das mit dem Stopfen 14 versehene Endteil weist innerhalb des Stofens Entlüftungsbohrungen 7 in den Raum unterhalb des Balges 15 auf sowie eine innerhalb des Balges 15 angeordnete und durch den Gehäuse-Innendruck beaufschlagte Kolbenringfläche 16 als Wirkfläche auf. Ebenfalls als wirksame Fläche ist die Ringfläche 17 anzusehen, die sich als mittlere Wirkfläche des Balges 15 ergibt und zur Aufweitung bzw. Längung des Balges 15 führt.

Zusammen mit der Stirnfläche 18 des Ventilkörpers/Stopfens 14 wirken die Kolbenringfläche 16 und die wirksame Fläche des Balges 17 derart, dass neben dem durch den Kompressor erzeugten und auf die Stirnfläche 18 wirkenden Leitungsdruck auch der in den Luftfedern anliegende und auf die Kolbenringfläche 16 und die wirksame Fläche des Balges 17 wirkende Druck als Öffnungsdruck für das Ventil wirkt. Die Elastizität des Balges 15 ist dann so eingestellt, dass Ventilsitz 11 und Ventilkörper/Stopfen 14 so gegeneinander gepresst werden, dass auf der Seite der Luftfedern, d.h. auf der rechtsseitigen Leitung in der Fig.2 ein Restdruck von ca. 2 bar aufrecht erhalten wird.

### Bezugszeichenliste

### (Teil der Beschreibung)

- 1: Restdruckhalteventil
- 2: Luftleitung
- 3: Ventilsitz
- 4: Ventilkörper
- 5: Ventilgehäuse
- 6: Schraubenfeder
- 7: Entlüftungsbohrung
- 8: Kolbenringfläche
- 9: Stirnfläche
- 10: Restdruckhalteventil
- 11: Ventilsitz
- 12: Fase
- 13: Endteil
- 14: Ventilkörper/Stopfen
- 15: Balg
- 16: Kolbenringfläche
- 17: Wirksame Ringfläche des Balges
- 18: Stirnfläche

## Patentansprüche

1. Rohrförmige Luftleitung (2) mit einem Restdruckhalteventil (1, 10) in einem Luftversorgungssystem, wobei das Restdruckhalteventil (1,10) zwischen einem Druckerzeuger und einem Druckverbraucher oder -aktuator angeordnet ist und folgende Elemente aufweist:
- einen Ventilsitz (3, 11),
- einen zum Ventilsitz komplementären und durch einen Öffnungsdruck bewegbaren Ventilkörper (4, 14),
- ein Ventilsitz und Ventilkörper umschließendes und gegen Umgebungsdruck abgedichtetes Ventilgehäuse (5, 15),
- ein zwischen Ventilsitz und Ventilkörper gegen den Öffnungsdruck des Ventils wirkendes elastisches Element (6, 15),
**dadurch gekennzeichnet, dass**
- sowohl der Ventilsitz (3, 11) als auch der Ventilkörper (4, 14) als zusammenwirkende Endteile einer Trennstelle der rohrförmigen Luftleitung (2) ausgebildet sind,
- der Ventilsitz (3, 11) an dem Endteil angeordnet ist, welches der Druckerzeugerseite der Luftleitung (2) zugeordnet ist und der Ventilkörper (4, 14) an dem Endteil angeordnet ist, welches der Druckverbraucherseite der Luftleitung (2) zugeordnet ist,
- der Ventilkörper (4, 14) koaxial zur rohrförmigen Luftleitung bewegbar ist,
- das als Ventilkörper ausgebildete Endteil eine Entlüftung (7) in das Ventilgehäuse (5, 15) sowie im Ventilgehäuse angeordnete und durch den Gehäuse-Innendruck beaufschlagte Kolbenringfläche (8, 16, 17) als Wirkfläche aufweist, derart, dass neben dem durch den Druckerzeuger erzeugten und auf die Stirnfläche (9) des Ventilkörpers (4) wirkenden Druck auch der im Druckverbraucher anliegende und auf die Kolbenringfläche (8) wirkende Druck als Öffnungsdruck wirkt, wobei
- das elastische Element (6, 15) den Ventilsitz (3) bestehend aus einem offenen und plan bearbeiteten Rohrabschnitt mit dem Ventilkörper (4) als ebenso plan bearbeiteter Stopfen dichtend verbindet und so gegeneinander presst, dass auf der Seite des Druckverbrauchers ein Restdruck aufrecht erhalten wird.

2. Rohrförmige Luftleitung (2) mit einem Restdruckhalteventil (1, 10) nach Anspruch 1, bei dem das als Ventilsitz (3, 11) ausgebildete eine Endteil aus einem offenen Rohrabschnitt besteht und das als Ventilkörper (4, 14) ausgebildete andere Endteil einen Stopfen aufweist, der mit dem Rohrabschnitt dichtend zusammenwirkt.

3. Rohrförmige Luftleitung (2) mit einem Restdruckhalteventil (1, 10) nach Anspruch 1 oder 2, bei dem das als Ventilsitz (3, 11) ausgebildete eine Endteil (13) aus einem Rohrabschnitts mit einer zum lichten inneren Durchmesser der rohrförmigen Leitung geneigten Fase (12) besteht und das als Ventilkörper ausgebildete andere Endteil einen im lichten inneren Durchmesser der rohrförmigen Leitung eingesetzten Stopfen (14) aufweist, der mit der geneigten Fase (12) dichtend zusammenwirkt.

4. Rohrförmige Luftleitung (2) mit einem Restdruckhalteventil (1, 10) nach einem der Ansprüche 1 bis 3, bei dem eines der Endteile mit einer konzentrischen und das andere Endteil umschließenden Hülse versehen ist, wobei die Hülse als Ventilgehäuse (5) ausgebildet ist.

5. Rohrförmige Luftleitung (2) mit einem Restdruckhalteventil (1, 10) nach Anspruch 4, bei dem die Hülse (5) gegen das andere Endteil abgedichtet und letzterem gegenüber axial längsverschieblich ausgebildet ist.

6. Rohrförmige Luftleitung (2) mit einem Restdruckhalteventil (1, 10) nach Anspruch 4 oder 5, bei dem das elastische Element (6) innerhalb der Hülse angeordnet ist.

7. Rohrförmige Luftleitung (2) mit einem Restdruckhalteventil (1, 10) nach einem der Ansprüche 1 bis 5, bei dem das elastische Element als elastischer Schlauch oder Balg (15) ausgebildet ist, der die beiden Endteile als Ventilgehäuse umgibt.

8. Rohrförmige Luftleitung (2) mit einem Restdruckhalteventil (1, 10) nach einem der Ansprüche 1 bis 7, bei dem die koaxiale Bewegbarkeit zwischen Ventilkörper und Ventilsitz durch Anschläge begrenzt ist.

9. Luftfedereinrichtung für ein Kraftfahrzeug, welche ein oder mehrere Luftfederbeine und mindestens ein Luftversorgungssystem aufweist, mit einer rohrförmigen Luftleitung (2) und einem Restdruckhalteventil (1, 10) nach einem der Ansprüche 1 bis 8.

## Claims

1. Tubular air line (2) having a residual pressure-holding valve (1, 10) in an air supply system, the residual pressure-holding valve (1, 10) being arranged between a pressure generator and a pressure consumer or actuator and having the following elements:
- a valve seat (3, 11),
- a valve body (4, 14) which is complementary with respect to the valve seat and can be moved by way of an opening pressure,
- a valve housing (5, 15) which encloses the valve seat and the valve body and is sealed with respect to ambient pressure,
- an elastic element (6, 15) which acts between the valve seat and the valve body counter to the opening pressure of the valve,
**characterized in that**
- both the valve seat (3, 11) and the valve body (4, 14) are configured as interacting end parts of a point of separation of the tubular air line (2),
- the valve seat (3, 11) is arranged on the end part which is assigned to the pressure generator side of the air line (2), and the valve body (4, 14) is arranged on the end part which is assigned to the pressure consumer side of the air line (2),
- the valve body (4, 14) can be moved coaxially with respect to the tubular air line,
- the end part which is configured as a valve body has a vent (7) into the valve housing (5, 15) and a piston ring face (8, 16, 17) as active face which is arranged in the valve housing and is loaded by the housing internal pressure, in such a way that, in addition to the pressure which is generated by the pressure generator and acts on the end face (9) of the valve body (4), the pressure which prevails in the pressure consumer and acts on the piston ring face (8) also acts as opening pressure,
- the elastic element (6, 15) sealingly connecting the valve seat (3) consisting of an open and flatly machined tube section to the valve body (4) as a likewise flatly machined plug and pressing them against one another in such a way that a residual pressure is maintained on the side of the pressure consumer.

2. Tubular air line (2) having a residual pressure-holding valve (1, 10) according to Claim 1, in which the one end part which is configured as a valve seat (3, 11) consists of an open tube section and the other end part which is configured as a valve body (4, 14) has a plug which interacts sealingly with the tube section.

3. Tubular air line (2) having a residual pressure-holding valve (1, 10) according to Claim 1 or 2, in which the one end part (13) which is configured as a valve seat (3, 11) consists of a tube section with a bevel (12) which is inclined with respect to the clear inner diameter of the tubular line, and the other end part which is configured as a valve body has a plug (14) which is inserted in the clear inner diameter of the tubular line and interacts sealingly with the inclined bevel (12).

4. Tubular air line (2) having a residual pressure-holding valve (1, 10) according to one of Claims 1 to 3, in which one of the end parts is provided with a sleeve which is concentric and encloses the other end part, the sleeve being configured as a valve housing (5).

5. Tubular air line (2) having a residual pressure-holding valve (1, 10) according to Claim 4, in which the sleeve (5) is sealed with respect to the other end part and is configured so as to be longitudinally displaceable axially with respect to the latter.

6. Tubular air line (2) having a residual pressure-holding valve (1, 10) according to Claim 4 or 5, in which the elastic element (6) is arranged within the sleeve.

7. Tubular air line (2) having a residual pressure-holding valve (1, 10) according to one of Claims 1 to 5, in which the elastic element is configured as an elastic hose or bellows (15) which surrounds the two end parts as a valve housing.

8. Tubular air line (2) having a residual pressure-holding valve (1, 10) according to one of Claims 1 to 7, in which the coaxial mobility between the valve body and the valve seat is limited by stops.

9. Pneumatic spring device for a motor vehicle, which pneumatic spring device has one or more pneumatic spring struts and at least one air supply system, with a tubular air line (2) and a residual pressure-holding valve (1, 10) according to one of Claims 1 to 8.

## Revendications

1. Conduite d'air tubulaire (2) comprenant une soupape de maintien de pression résiduelle (1, 10) dans un système d'alimentation en air, la soupape de maintien de pression résiduelle (1, 10) étant disposée entre un générateur de pression et un consommateur de pression ou un actionneur à pression et comprenant les éléments suivants :
- un siège de soupape (3, 11),
- un corps de soupape (4, 14) complémentaire au siège de soupape et déplaçable au moyen d'une pression d'ouverture,
- un boîtier de soupape (5, 15) entourant le siège de soupape et le corps de soupape et fermé hermétiquement par rapport à la pression ambiante,
- un élément élastique (6, 15) agissant entre le siège de soupape et le corps de soupape à l'encontre de la pression d'ouverture de la soupape,
**caractérisée en ce que**
- à la fois le siège de soupape (3, 11) et le corps de soupape (4, 14) sont réalisés sous forme de parties d'extrémité coopérantes d'un point de séparation de la conduite d'air tubulaire (2),
- le siège de soupape (3, 11) est disposé sur la partie d'extrémité qui est associée au côté générateur de pression de la conduite d'air (2) et le corps de soupape (4, 14) est disposé sur la partie d'extrémité qui est associée au côté consommateur de pression de la conduite d'air (2),
- le corps de soupape (4, 14) est déplaçable de manière coaxiale à la conduite d'air tubulaire,
- la partie d'extrémité réalisée sous forme de corps de soupape comprend une évacuation d'air (7) dans le boîtier de soupape (5, 15) ainsi qu'une surface annulaire de piston (8, 16, 17), faisant office de surface active, disposée dans le boîtier de soupape et sollicitée par la pression intérieure du boîtier, de telle sorte qu'en plus de la pression générée par le générateur de pression et agissant sur la surface frontale (9) du corps de soupape (4), la pression appliquée dans le consommateur de pression et agissant sur la surface annulaire de piston (8) agit également en tant que pression d'ouverture,
- l'élément élastique (6, 15) reliant de manière étanche le siège de soupape (3) constitué d'une portion tubulaire ouverte et usinée à plat au corps de soupape (4) sous forme d'obturateur également usiné à plat et les pressant l'un contre l'autre, de telle sorte qu'une pression résiduelle soit maintenue du côté du consommateur de pression.

2. Conduite d'air tubulaire (2) comprenant une soupape de maintien de pression résiduelle (1, 10) selon la revendication 1, dans laquelle l'une des parties d'extrémité, réalisée sous forme de siège de soupape (3, 11), est constituée d'une portion tubulaire ouverte et l'autre partie d'extrémité, réalisée sous forme de corps de soupape (4, 14), comprend un obturateur qui coopère de manière étanche avec la portion tubulaire.

3. Conduite d'air tubulaire (2) comprenant une soupape de maintien de pression résiduelle (1, 10) selon la revendication 1 ou 2, dans laquelle l'une des parties d'extrémité (13), réalisée sous forme de siège de soupape (3, 11), est constituée d'une portion tubulaire pourvue d'un chanfrein (12) incliné vers le diamètre intérieur libre de la conduite tubulaire et l'autre partie d'extrémité, réalisée sous forme de corps de soupape, comprend un obturateur (14) inséré dans le diamètre intérieur libre de la conduite tubulaire, lequel obturateur coopère de manière étanche avec le chanfrein (12) incliné.

4. Conduite d'air tubulaire (2) comprenant une soupape de maintien de pression résiduelle (1, 10) selon l'une quelconque des revendications 1 à 3, dans laquelle l'une des parties d'extrémité est pourvue d'une douille concentrique et entourant l'autre partie d'extrémité, la douille étant réalisée sous forme de boîtier de soupape (5).

5. Conduite d'air tubulaire (2) comprenant une soupape de maintien de pression résiduelle (1, 10) selon la revendication 4, dans laquelle la douille (5) est fermée hermétiquement par rapport à l'autre partie d'extrémité et est réalisée de manière longitudinalement mobile axialement par rapport à cette dernière.

6. Conduite d'air tubulaire (2) comprenant une soupape de maintien de pression résiduelle (1, 10) selon la revendication 4 ou 5, dans laquelle l'élément élastique (6) est disposé à l'intérieur de la douille.

7. Conduite d'air tubulaire (2) comprenant une soupape de maintien de pression résiduelle (1, 10) selon l'une quelconque des revendications 1 à 5, dans laquelle l'élément élastique est réalisé sous forme de tuyau ou de soufflet (15) élastique qui entoure, en tant que boîtier de soupape, les deux parties d'extrémité.

8. Conduite d'air tubulaire (2) comprenant une soupape de maintien de pression résiduelle (1, 10) selon l'une quelconque des revendications 1 à 7, dans laquelle la mobilité coaxiale entre le corps de soupape et le siège de soupape est limitée par des butées.

9. Dispositif de ressort pneumatique pour un véhicule automobile, lequel comprend une ou plusieurs jambes de ressort pneumatique et au moins un système d'alimentation en air, comprenant une conduite d'air tubulaire (2) et une soupape de maintien de pression résiduelle (1, 10) selon l'une quelconque des revendications 1 à 8.
